# EUROPÄISCHE PATENTSCHRIFT

(11) **EP 0 482 379 B1**
(45) Veröffentlichungstag und Bekanntmachung des Hinweises auf die Patenterteilung: **11.08.1993**
(21) Anmeldenummer: 91116566.0
(22) Anmeldetag: 27.09.1991
(51) Int. Cl.: B60T 8/48

(54) **Hydraulische Mehrkreis-Bremsanlage, insbesondere für Kraftfahrzeuge**
Multi circuit hydraulic brake system, especially for motor vehicles
Système de freinage hydraulique à plusieurs circuits, notamment pour véhicules automobiles

(30) Priorität: 26.10.1990 DE 4034113
(43) Veröffentlichungstag der Anmeldung: 29.04.1992
(73) Patentinhaber: ROBERT BOSCH GMBH, 70442 Stuttgart (DE)
(72) Erfinder: Willmann, Karl-Heinz, Dipl.-Ing., W-7149 Freiberg/Neckar (DE); Holzmann, Roland, Dipl.-Ing. (FH), W-7146 Tamm (DE)

(56) Entgegenhaltungen:
- EP-A- 0 319 719
- EP-A- 0 376 788
- DE-A- 3 939 177

## Beschreibung

Die Erfindung geht aus von einer hydraulischen Mehrkreis-Bremsanlage nach der Gattung des Hauptanspruchs.

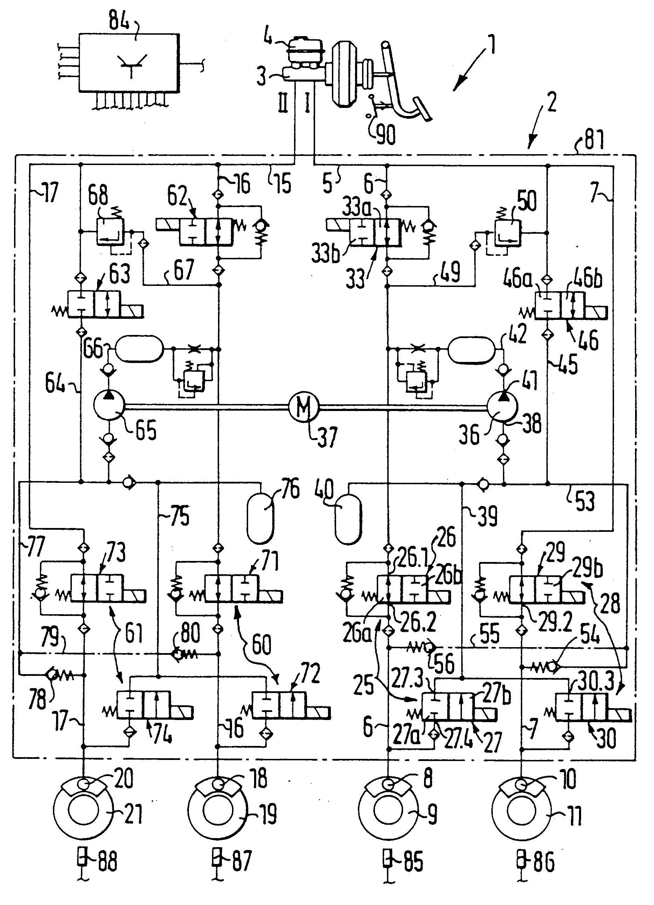

Es ist schon eine derartige hydraulische Mehrkreis-Bremsanlage bekannt (DE-A- 37 41 310, Figur 1), bei der die erste Ventilanordnung der dem nicht angetriebenen Fahrzeugrad zugeordneten Radbremse aus zwei 2/2-Wegeventilen besteht, von denen das sogenannte Einlaßventil in der Bremsleitung liegt, während das sogenannte Auslaßventil den dritten Anschluß der ersten Ventilanordnung aufweist und in einer Abströmleitung liegt, die zwischen dem Einlaßventil und der Radbremse von der Bremsleitung ausgeht und zur Eingangsseite der Pumpe führt. Im Antriebsschlupfregelfall sind die beiden Wegeventile der ersten Ventilanordnung in Durchlaßstellung und die zweite Ventilanordnung in der Bremsleitung des angetriebenen Fahrzeugrades in Sperrstellung geschaltet, so daß die Pumpe Druckmittel durch den Hauptbremszylinder aus einem Druckmittelvorratsbehälter ansaugen, in die Bremsleitung des angetriebenen Fahrzeugrades fördern und in der zugeordneten Radbremse Bremsdruck aufbauen kann. Dabei ist wegen des seine Durchlaßstellung einnehmenden Auslaßventils bei Beginn der Druckmittelförderung das Entstehen von schädlichem Unterdruck im Radbremszylinder des nicht angetriebenen Fahrzeugrades nicht völlig ausgeschlossen. Außerdem kann beim vom Fahrer ausgelösten Einbremsen während des Antriebsschlupfregelfalles sich nicht sofort Bremsdruck in den Radbremszylindern aufbauen, weil die Bremsleitung der dem angetriebenen Fahrzeugrad zugeordneten Radbremse bis zum Umschalten der zweiten Ventilanordnung gesperrt und in die Bremsleitung der dem nicht angetriebenen Fahrzeugrad zugeordneten Radbremse eingesteuertes Druckmittel bis zum Schließen des Auslaßventils zur Pumpe abströmen kann.

### Vorteile der Erfindung

Die erfindungsgemäße hydraulische Mehrkreis-Bremsanlage mit den kennzeichnenden Merkmalen des Hauptanspruchs hat demgegenüber den Vorteil, daß im Antriebsschlupfregelfall ein vom Fahrer ausgelöstes, unverzögertes Einbremsen möglich ist, weil bis zum Schließen der dritten Ventilanordnung und Öffnen der zweiten Ventilanordnung sowie Umschalten der ersten Ventilanordnung des nicht angetriebenen Fahrzeugrades in die Druckaufbaustellung Bremsdruck vom Hauptbremszylinder durch die Ansaugleitung und die Hilfsbremsleitung unter Überwindung der vierten Ventilanordnung in die Radbremse des nicht angetriebenen Rades einsteuerbar ist. Hierdurch wird ein Bremswegverlust vermieden. Vorteilhaft ist auch die Maßnahme, die erste Ventilanordnung des nicht angetriebenen Fahrzeugrades im Antriebsschlupfregelfall in Druckhaltestellung zu schalten, da hiermit das Auftreten von Unterdruck mit der möglichen Folge des Luftansaugens in den Radbremszylinder dieses Rades vermieden ist.

Durch die in den Unteransprüchen aufgeführten Maßnahmen sind vorteilhafte Weiterbildungen und Verbesserungen der im Hauptanspruch angegebenen hydraulischen Mehrkreis-Bremsanlage möglich.

Mit der im Anspruch 2 angegebenen Weiterbildung der Bremsanlage ist auf einfache Weise auch die Radbremse des angetriebenen Fahrzeugrades im Bremskreis in die unverzögerte Bremsdruckeinsteuerung beim vom Fahrer ausgelösten Einbremsen eingeschlossen.

Die in den Ansprüchen 3 und 4 gekennzeichneten Ausgestaltungen der Bremsanlage geben für die vorgesehene Verwendung besonders zweckmäßige Bauformen von Ventilanordnungen an.

### Zeichnung

Ein Ausführungsbeispiel der Erfindung ist anhand eines in der Zeichnung dargestellten Schaltbildes einer hydraulischen Mehrkreis-Bremsanlage für Kraftfahrzeuge in der nachfolgenden Beschreibung näher erläutert.

### Beschreibung des Ausführungsbeispiels

Eine in der Zeichnung dargestellte, hydraulische Mehrkreis-Bremsanlage 1 für Kraftfahrzeuge ist mit einer Blockierschutz- und Antriebsschlupfregeleinrichtung 2 ausgestattet. Die Bremsanlage 1 hat einen pedalbetätigbaren Hauptbremszylinder 3 mit einem aufgesetzten Druckmittel-Vorratsbehälter 4. Vom Bremszylinder 3 geht eine Hauptbremsleitung 5 eines ersten Bremskreises I aus. Die Hauptbremsleitung 5 ist in zwei Bremsleitungen 6 und 7 verzweigt. Die Bremsleitung 6 führt zu einem Radbremszylinder 8 einer Radbremse 9 eines nicht dargestellten, angetriebenen Fahrzeugrades. Die Bremsleitung 7 steht mit dem Radbremszylinder 10 einer Radbremse 11 eines ebenfalls nicht dargestellten, nicht angetriebenen Fahrzeugrades in Verbindung.

Vom Hauptbremszylinder 3 geht außerdem eine Hauptbremsleitung 15 eines zweiten Bremskreises II aus. Die Hauptbremsleitung 15 ist in zwei Bremsleitungen 16 und 17 fortgeführt. Die Bremsleitung 16 endet an einem Radbremszylinder 18 der Radbremse 19 eines nicht dargestellten, angetriebenen Fahrzeugrades. Die Bremsleitung 17 steht mit dem Radbremszylinder 20 der Radbremse 21 eines ebenfalls nicht dargestellten, nicht angetriebenen Fahrzeugrades in Verbindung. Die den Radbremsen 9 und 19 zugeordneten angetriebenen Fahrzeugräder sind einer Fahrzeugachse zugehörig; die nicht angetriebenen Fahrzeugräder, denen die Radbremsen 11 und 21 zugeordnet sind, gehören zu einer zweiten Achse des Fahrzeugs. Die Zuordnung der Radbremsen ist derart gewählt, daß sich die beiden Radbremsen 9 und 11 bzw. 19 und 21 des jeweiligen Bremskreises I bzw. II aneinander diagonal gegenüberliegen. Da die beiden Bremskreise I und II identisch ausgestattet sind, ist nachfolgend lediglich der Bremskreis I ausführlich beschrieben.

Der Radbremse 9 des angetriebenen Fahrzeugrades ist eine erste Ventilanordnung 25 zugeordnet. Diese besteht aus einem Einlaßventil 26 und einem Auslaßventil 27. Die beiden Ventile 26 und 27 sind als 2/2-Wegeventil ausgebildet. Die erste Ventilanordnung 25 kann auch als nicht dargestelltes, in der Bremsleitung 6 liegendes 3/3-Wegeventil ausgebildet sein. Das Einlaßventil 26 hat eine federbetätigte Durchlaßstellung 26a und eine elektromagnetisch schaltbare Sperrstellung 26b. Das Auslaßventil 27 weist eine federbetätigte Sperrstellung 27a und eine elektromagnetisch geschaltete Durchlaßstellung 27b auf. Die erste Ventilanordnung 25 besitzt folgende Anschlüsse: Am Einlaßventil 26 einen ersten, hauptbremszylinderseitigen Anschluß 26.1 und einen zweiten radbremsseitigen Anschluß 26.2 für die Bremsleitung 6; am Auslaßventil 27 einen dritten Anschluß 27.3 zur Abgabe von der Radbremse 9 entnommenem Druckmittel, welches einem vierten Anschluß 27.4 zuführbar ist. Die erste Ventilanordnung 25 ist in Schaltstellung für Druckaufbau, Druckhalten und Druckabbau im Radbremszylinder 8 der Radbremse 9 schaltbar: In der Schaltstellung für Druckaufbau nehmen, wie gezeichnet, das Einlaßventil 26 seine Durchlaßstellung 26a und das Auslaßventil 27 seine Sperrstellung 27a ein. In der Schaltstellung für Druckhalten ist das Einlaßventil 26, ebenso wie das Auslaßventil 27, in seine Sperrstellung 26b geschaltet. In der Schaltstellung für Druckabbau nimmt das Einlaßventil 26 seine Sperrstellung 26b ein; das Auslaßventil 27 ist in die Durchlaßstellung 27b geschaltet.

Der Radbremse 11 des nicht angetriebenen Fahrzeugrades ist ebenfalls eine erste Ventilanordnung 28 mit einem Einlaßventil 29 und einem Auslaßventil 30 zugeordnet. Die Ventilanordnung 28 weist in gleicher Weise wie die Ventilanordnung 25 Anschlüsse und Schaltstellungen für Druckaufbau, Druckhalten und Druckabbau auf.

In der Bremsleitung 6 des der Radbremse 9 zugeordneten, angetriebenen Fahrzeugrades ist zwischen dem Hauptbremszylinder 3 und der ersten Ventilanordnung 25 eine zweite Ventilanordnung 33 vorgesehen. Diese Ventilanordnung 33 ist als 2/2-Wegeventil ausgebildet und weist eine federbetätigte Durchlaßstellung 33a und eine elektromagnetische schaltbare Sperrstellung 33b auf.

Dem Bremskreis I ist außerdem eine selbstansaugende Pumpe 36 mit einem elektrischen Antriebsmotor 37 zugeordnet. Die Eingangsseite 38 der Pumpe 36 steht durch eine Rückführleitung 39 mit dem dritten Anschluß 27.3 bzw. 30.3 der Auslaßventile 27 und 30 der beiden ersten Ventilanordnungen 25 und 28 des Bremskreises I in Verbindung. An die Rückführleitung 39 ist eine Speicherkammer 40 zur Aufnahme von den Radbremszylindern 8 und 10 entnommenes Druckmittel angeschlossen. Von der Ausgangsseite 41 der Pumpe 36 geht eine Förderleitung 42 aus, welche zwischen der ersten Ventilanordnung 25 und der zweiten Ventilanordnung 33 an die Bremsleitung 6 der Radbremse 9 des angetriebenen Fahrzeugrades angeschlossen ist.

Die Eingangsseite 38 der Pumpe 36 ist außerdem durch eine Ansaugleitung 45 mit der Bremsleitung 7 der Radbremse 11 des nicht angetriebenen Fahrzeugrades verbunden, und zwar zwischen dem Hauptbremszylinder 3 und der in der Bremsleitung 7 liegenden ersten Ventilanordnung 28. In der Ansaugleitung 45 befindet sich eine dritte Ventilanordnung 46, die als 2/2-Wegeventil ausgebildet ist. Die dritte Ventilanordnung 46 hat eine federbetätigte Sperrstellung 46a und eine elektromagnetisch schaltbare Durchlaßstellung 46b.

Von der Bremsleitung 6 geht zwischen der Einmündung der Förderleitung 42 und der zweiten Ventilanordnung 33 eine Überströmleitung 49 aus, welche zwischen der dritten Ventilanordnung 46 und dem Hauptbremszylinder 3 an die Ansaugleitung 45 angeschlossen ist. In der Überströmleitung 49 ist ein Druckbegrenzungsventil 50 mit Durchlaßrichtung von der Bremsleitung 6 zur Ansaugleitung 45 angeordnet.

Von der Ansaugleitung 45 geht zwischen der dritten Ventilanordnung 46 und der Eingangsseite 38 der Pumpe 36 eine Hilfsbremsleitung 53 aus, welche zwischen dem zweiten, radbremsseitigen Anschluß 29.2 des Einlaßventils 29 der ersten Ventilanordnung 28 und der Radbremse 11 des nicht angetriebenen Fahrzeugrades an dessen Bremsleitung 7 angeschlossen ist. Diese Hilfsbremsleitung 53 enthält eine vierte, drucksteuerbare Ventilanordnung 54 in Form eines federbelasteten Rückschlagventils mit Durchlaßwirkung vom Hauptbremszylinder 3 zum Radbremszylinder 10 der Radbremse 11. Wie mit strichpunktierten Linien angedeutet, kann ein Hilfsbremsleitungszweig 55 mit einer in gleicher Weise ausgebildeten vierten, drucksteuerbaren Ventilanordnung 56 zwischen dem zweiten Anschluß 26.2 des Einlaßventils 26 und dem Radbremszylinder 8 der Radbremse 9 des angetriebenen Fahrzeugrades an dessen Bremsleitung 6 angeschlossen sein.

Wegen der identischen Ausbildung des Bremskreises II weist dieser eine der Bremsleitung 16 zugeordnete erste Ventilanordnung 60 und eine der Bremsleitung 17 zugeordnete erste Ventilanordnung 61 auf. In der Bremsleitung 16 ist eine zweite Ventilanordnung 62 vorgesehen; eine dritte Ventilanordnung 63 befindet sich in einer Ansaugleitung 64 einer selbstansaugenden Pumpe 65 des Bremskreises II, die ebenfalls vom Motor 37 angetrieben ist. Die Pumpe 65 steht durch eine Förderleitung 66 mit der Bremsleitung 16 in Verbindung. Außerdem ist eine Überströmleitung 67 mit einem Druckbegrenzungsventil 68 vorgesehen.

Die erste Ventilanordnung 60 besitzt ein Einlaßventil 71 und ein Auslaßventil 72; die erste Ventilanordnung 61 besteht aus einem Einlaßventil 73 und einem Auslaßventil 74. Von den beiden Auslaßventilen 72 und 74 geht eine Rückführleitung 75 mit angeschlossener Speicherkammer 76 zur Pumpe 65 aus. Die Ansaugleitung 64 ist durch eine Hilfsbremsleitung 77 mit drucksteuerbarer Ventilanordnung 78 zwischen dem Einlaßventil 73 und dem Radbremszylinder 20 mit der Bremsleitung 17 verbunden. Ebenfalls kann im Bremskreis II ein Hilfsbremsleitungszweig 79 mit drucksteuerbarer Ventilanordnung 80 zur Bremsleitung 16 geführt sein. Die in der strichpunktierten Umrandung liegenden Elemente sind in einem sogenannten Hydroaggregat 81 der Mehrkreis-Bremsanlage 1 vereinigt.

Die Bremsanlage 1 weist außerdem ein elektronisches Steuergerät 84 auf, welches mittels Drehzahlsensoren 85 bis 88 das Drehverhalten der nicht dargestellten Fahrzeugräder überwacht und entsprechend einem vorgegebenen Regelalgorithmus im Blockierschutz- und Antriebsschlupfregelfall die Ventile sowie den Antriebsmotor 37 schaltet. Ferner ist ein bremspedalbetätigbarer Bremslichtschalter 90 mit dem Steuergerät 84 verbunden.

Die Mehrkreis-Bremsanlage 1 folgende Funktionen:

Bei einer vom Fahrer des Fahrzeugs ausgelösten Bremsung, während der die Ventilanordnungen der Bremsanlage die gezeichnete Stellung einnehmen, wird durch Betätigung des Hauptbremszylinders 3 in diesem Bremsdruck erzeugt und durch Verschieben von Druckmittelmengen in den Bremsleitungen 5, 6 und 7 des Bremskreises I sowie in den Bremsleitungen 15, 16 und 17 des Bremskreises II Druck in den Radbremszylindern 8, 10 sowie 18, 20 der Radbremsen 9, 11 und 19, 21 übertragen. Dabei überwacht das Steuergerät 84 aufgrund der Signale der Drehzahlsensoren 85 bis 88 das Drehverhalten der Fahrzeugräder.

Droht bei einer solchen Bremsung beispielweise das der Radbremse 9 zugeordnete, angetriebene Fahrzeugrad zu blockieren, so schaltet das Steuergerät 84 die erste Ventilanordnung 25 in der Bremsleitung 6 in die Schaltstellung für Druckabbau, d. h. das Einlaßventil 26 wird in die Sperrstellung 26b und das Auslaßventil 27 wird in die Durchlaßstellung 27b geschaltet. Aus dem Radbremszylinder 8 der Radbremse 9 kann nun Druckmittel durch die Rückführleitung 39 in die Speicherkammer 40 abströmen, so daß der Bremsdruck im Radbremszylinder 8 sinkt. Die vom Steuergerät 84 gleichzeitig eingeschaltete Pumpe 36 fördert das dem Radbremszylinder 8 entnommene Druckmittel durch die Förderleitung 42 in die Bremsleitung 6. Entsprechend dem im Steuergerät 84 abgespeicherten Regelalgorithmus schließen sich an Phasen des Druckabbaus Phasen für Druckhalten und Druckaufbau im Radbremszylinder 8 der Radbremse 9 an, bis das angetriebene Fahrzeugrad stabiles Drehverhalten zeigt. Dabei werden bei Druckhalten das Einlaßventil 26 und das Auslaßventil 27 der Ventilanordnung 25 in die Sperrstellung 26b bzw. 27a geschaltet. Bei Druckaufbau nimmt das Auslaßventil 27 seine Sperrstellung 27a ein, während das Einlaßventil 26 in die Durchlaßstellung 26a geschaltet wird. Nach Beendigung eines solchen Blockierschutzregelfalles schaltet das Steuergerät 84 den Antriebmotor 37 der Pumpe 36 ab.

Droht dagegen beim Anfahren und Beschleunigen des Fahrzeuges das der Radbremse 9 zugeordnete Fahrzeugrad durchzudrehen, so wird dies ebenfalls vom Steuergerät 84 aufgrund der Signale der Drehzahlsensoren 85 bis 88 erkannt. Das Steuergerät 84 schaltet die zweite Ventilanordnung 33 in der Bremsleitung 6 in die Sperrstellung 33b und die dritte Ventilanordnung 46 in der Ansaugleitung 45 in die Durchlaßstellung 46b. Gleichzeitig werden der Antriebsmotor 37 der Pumpe 36 eingeschaltet und das Einlaßventil 29 der ersten Ventilanordnung 28 in der Bremsleitung 7 in die Sperrstellung 29b geschaltet. Die übrigen Ventile der Bremsanlage 1 verbleiben in der gezeichneten Stellung. Die selbstansaugende Pumpe 36 saugt nun Druckmittel aus dem Druckmittelvorratsbehälter 4 durch den Hauptbremszylinder 3, die Hauptbremsleitung 5 und die Ansaugleitung 45 an. Die Pumpe 36 fördert das Druckmittel durch die Förderleitung 42 in die Bremsleitung 6 und erzeugt im Radbremszylinder 8 der Radbremse des unzulässig großem Schlupf unterliegenden, angetriebenen Fahrzeugrades Bremsdruck. Entsprechend dem vorgegebenen Regelalgorithmus schließen sich Phasen für Druckhalten und Druckabbau an, bei denen die erste Ventilanordnung 25 in der Bremsleitung 6 die im Blockierschutzregelfall bereits erwähnten Schaltstellungen einnimmt. In einem solchen Antriebsschlupfregelfall wird nicht vom Radbremszylinder 8 aufgenommenes Druckmittel durch das Druckbegrenzungsventil 50 in die Ansaugleitung 45 abgesteuert.

Leitet bei einem derartigen Antriebsschlupfregelfall an der Radbremse 9 der Fahrer durch Betätigen des Hauptbremszylinders 3 eine Bremsung ein, so wird diese vom Steuergerät 84 durch das Schließen des Bremslichtschalters 90 erkannt. Das Steuergerät 84 schaltet die zweite Ventilanordnung 33 in der Bremsleitung 6 in die Durchlaßstellung 33a und die dritte Ventilanordnung 46 in der Ansaugleitung 45 in die Sperrstellung 46a. Außerdem werden die ersten Ventilanordnungen 25 und 28 in den Bremsleitungen 6 und 7 in ihre gezeichnete Stellung für Druckaufbau geschaltet, so daß der vom Hauptbremszylinder 3 erzeugte Bremsdruck in allen Radbremszylindern 8, 10, 18 und 20 des Fahrzeugs wirksam werden kann. Bis zum Umschalten der am vorbeschriebenen Antriebsschlupfregelfall im Bremskreis I beteiligten Ventilanordnungen, insbesondere des Einlaßventils 29 in die Durchlaßstellung 29a, kann jedoch bereits Bremsdruck vom Hauptbremszylinder 3 durch die Ansaugleitung 45, die noch ihre Durchlaßstellung 46b einnehmende dritte Ventilanordnung 46, die Hilfsbremsleitung 53 und die vierte Ventilanordnung 54 in den Radbremszylinder 10 der Radbremse 11 des nicht angetriebenen Fahrzeugrades eingesteuert werden. In entsprechender Weise erfolgt die Einsteuerung von Bremsdruck in den Radbremszylinder 20 der Radbremse 21 des anderen, nicht angetriebenen Fahrzeugrades. Bei einer Bremsanlage 1 mit den Radbremsen 9 und 19 der angetriebenen Fahrzeugräder ebenfalls zugeordneten vierten Ventilanordnungen 56 und 80 kann im Antriebsschlupfregelfall der vom Fahrer erzeugte Bremsdruck auch in den Radbremszylindern 8 und 18 dieser Radbremsen unverzögert wirksam werden, falls die Einlaßventile 26 bzw. 71 ihre Sperrstellung 26b bzw. 71b einnehmen.

Aber auch bei einem ausgefallenen Bremslichtschalter 90 erkennt das Steuergerät 84 im Antriebsschlupfregelfall einen vom Fahrer ausgelösten Bremswunsch: Der in die Radbremszylinder 10 und 20 der den nicht angetriebenen Fahrzeugrädern zugeordneten Radbremsen 11 und 21 eingesteuerte Bremsdruck führt nämlich zu einer Verringerung der Umfangsgeschwindigkeit dieser Räder im Vergleich zur Fahrzeuggeschwindigkeit, was vom Steuergerät aufgrund der Signale der Drehzahlsensoren 86 und 88 mit der Folge des Abbruchs des Antriebsschlupfregelfalles erkannt wird. Bei einem Fahrzeug mit den Radbremsen 9 und 19 der angetriebenen Fahrzeugräder zugeordneten vierten Ventilanordnungen 56 und 80 kann das Steuergerät 84 auch aus der Auswertung der Signale der Drehzahlsensoren 85 und 87 einen Bremswunsch des Fahrers erkennen, weil die im Antriebsschlupfregelfall über der Fahrzeuggeschwindigkeit liegende Umfangsgeschwindigkeit eines durchdrehenden Rades durch das Einsteuern von Bremsdruck durch die vierte Ventilanordnung auf eine Umfangsgeschwindigkeit reduziert wird, welche unterhalb der Fahrzeuggeschwindigkeit liegt.

## Patentansprüche

1. Hydraulische Mehrkreis-Bremsanlage (1), insbesondere für Kraftfahrzeuge, mit einer Blockierschutz- und Antriebsschlupfregeleinrichtung, welche umfaßt:
- einen Hauptbremszylinder (3), von dem je Bremskreis (I) hauptbremszylinderseitig miteinander verbundene Bremsleitungen (6, 7) zur Radbremse (9) eines angetriebenen und zur Radbremse (11) eines nicht angetriebenen Fahrzeugrades ausgehen,
- je eine der Radbremse (9, 11) des angetriebenen und des nicht angetriebenen Fahrzeugrades zugeordnete erste Ventilanordnung (25) mit Schaltstellungen für Druckaufbau, Druckhalten und Druckabbau, welche je einen ersten, hauptbremszylinderseitigen Anschluß (26.1) und einen zweiten, radbremsseitigen Anschluß (26.2) für die Bremsleitung (6) sowie einen dritten Anschluß (27.3) für der Radbremse (9) entnommenes Druckmittel hat,
- eine in der Bremsleitung (6) des angetriebenen Fahrzeugrades zwischen dem Hauptbremszylinder (3) und der ersten Ventilanordung (25) angeordnete zweite Ventilanordnung (33), mit der die Bremsleitung (6) im Antriebsschlupfregelfall absperrbar ist,
- je Bremskreis (I) eine selbstansaugende Pumpe (36), deren Eingangsseite (38) sowohl mit dem dritten Anschluß (27.3) der ersten Ventilanordnungen (25) als auch wenigstens mittelbar mit der Bremsleitung (7) des nicht angetriebenen Fahrzeugrades und deren Ausgangsseite (41) mit der Bremsleitung (6) des angetriebenen Fahrzeugrades zwischen der ersten und der zweiten Ventilanordnung (25, 33) verbunden ist,
gekennzeichnet durch die Merkmale:
- die Eingangsseite (38) der Pumpe (36) ist mit der Bremsleitung (7) des nicht angetriebenen Fahrzeugrades zwischen dessen erster Ventilanordnung (28), welche im Antriebsschlupfregelfall in Druckhaltestellung geschaltet ist, und dem Hauptbremszylinder (3) wenigstens mittelbar durch eine Ansaugleitung (45) verbunden, in der eine die Leitung (45) im Antriebsschlupfregelfall öffnende dritte Ventilanordnung (46) liegt,
- von der Ansaugleitung (45) geht zwischen der dritten Ventilanordnung (46) und der Pumpe (36) eine Hilfsbremsleitung (53) aus, welche zwischen dem zweiten, radbremsseitigen Anschluß (29.2) der ersten Ventilanordnung (28) und der Radbremse (11) des nicht angetriebenen Fahrzeugrades an dessen Bremsleitung (7) angeschlossen ist und eine drucksteuerbare vierte Ventilanordnung (54) mit Durchlaßwirkung vom Hauptbremszylinder (3) zur Radbremse (11) enthält.

2. Hydraulische Mehrkreis-Bremsanlage nach Anspruch 1, dadurch gekennzeichnet, daß die Bremsleitung (6) des angetriebenen Fahrzeugrades in gleicher Weise wie beim nicht angetriebenen Fahrzeugrad durch eine Hilfsbremsleitung (55) mit einer drucksteuerbaren vierten Ventilanordnung (56) mit der Ansaugleitung (45) in Verbindung steht.

3. Hydraulische Mehrkreis-Bremsanlage nach Anspruch 1 oder 2, dadurch gekennzeichnet, daß die vierte Ventilanordnung (54) als Rückschlagventil ausgebildet ist.

4. Hydraulische Mehrkreis-Bremsanlage nach Anspruch 1, dadurch gekennzeichnet, daß die dritte Ventilanordnung (46) ein aus einer federbetätigten Sperrstellung (46a) elektromagnetisch in seine Durchlaßstellung (46b) schaltbares 2/2-Wegeventil ist.

## Claims

1. Hydraulic multi-circuit brake system (1), in particular for motor vehicles, having an anti-lock brake device and a drive slip control device, which brake system comprises:
- a main brake cylinder (3) from which emerge, per brake circuit (I), brake conduits (6, 7) to the wheel brake (9) of a driven vehicle wheel and to the wheel brake (11) of a non-driven vehicle wheel, which brake conduits (6, 7) are connected together at the main brake cylinder end,
- one first valve arrangement (25), respectively associated with the wheel brake (9, 11) of the driven vehicle wheel and of the non-driven vehicle wheel, with switch positions for pressure build-up, pressure retention and pressure reduction, which first valve arrangement (25) has, respectively, one first connection (26.1) at the main brake cylinder end, one second connection (26.2) at the wheel brake end for the brake conduit (6) and one third connection (27.3) for the hydraulic fluid extracted from the wheel brake (9),
- a second valve arrangement (33), which is arranged in the brake conduit (6) of the driven vehicle wheel between the main brake cylinder (3) and the first valve arrangement (25) and by means of which the brake conduit (6) can be shut off in the drive slip control case,
- per brake circuit (I), a self-priming pump (36) whose inlet end (38) is connected both to the third connection (27.3) of the first valve arrangement (25) and, at least indirectly, to the brake conduit (7) of the non-driven vehicle wheel and whose outlet end (41) is connected to the brake conduit (6), of the driven vehicle wheel, between the first and the second valve arrangements (25, 33),
characterised by the features:
- the inlet end (38) of the pump (36) is connected, at least indirectly, to the brake conduit (7) of the non-driven vehicle wheel between its first valve arrangement (28), which is switched into the pressure retention position in the drive slip control case, and the main brake cylinder (3) by means of a suction conduit (45), in which is located a third valve arrangement (46) which opens the conduit (45) in the drive slip control case,
- emerging from the suction conduit (45) between the third valve arrangement (46) and the pump (36), there is an auxiliary brake conduit (53), which is connected to the brake conduit (7) of the non-driven wheel between the second connection (29.2) at the wheel brake end, of the first valve arrangement (28) and the wheel brake (11) of this non-driven vehicle wheel, and which contains a fourth pressure-controllable valve arrangement (54) which effects a passage from the main brake cylinder (3) to the wheel brake (11).

2. Hydraulic multi-circuit brake system according to Claim 1, characterised in that the brake conduit (6) of the driven vehicle wheel is in connection, in the same way as in the case of the non-driven vehicle wheel, with the suction conduit (45) by means of an auxiliary brake conduit (55) with a pressure-controllable fourth valve arrangement (56).

3. Hydraulic multi-circuit brake system according to Claim 1 or 2, characterised in that the fourth valve arrangement (54) is configured as a non-return valve.

4. Hydraulic multi-circuit brake system according to Claim 1, characterised in that the third valve arrangement (46) is a 2/2-way valve which can be switched electromagnetically from a spring-actuated shut-off position (46a) into its open position (46b).

## Revendications

1. Système de freinage hydraulique à plusieurs circuits (1), notamment pour véhicules automobiles, avec un dispositif de protection contre le blocage et de réglage du patinage de l'entraînement, cet ensemble comprenant :
- un cylindre de freinage principal (3), duquel partent pour chaque circuit de freinage (I), reliées entre elles côté cylindre de freinage principal, des canalisations de freinage (6, 7) vers un frein de roue (9) d'une roue entraînée du véhicule et vers un frein de roue (11) d'une roue non entraînée du véhicule,
- un premier dispositif de soupapes (25), associé à chacun des freins de roues (9, 11) de la roue entraînée et de la roue non entraînée du véhicule, avec des positions de commutation pour l'établissement de la pression, le maintien de la pression et l'abaissement de la pression, cet embranchement ayant respectivement un premier raccordement (26.1) côté cylindre de freinage principal et un second raccordement (26.2) côté frein de roue pour la canalisation de freinage (6) ainsi qu'un troisième raccordement (27.3) pour le fluide sous pression prélevé au frein de roue (9),
- un second dispositif de soupapes (33) disposé sur la canalisation de freinage (6) de la roue entraînée du véhicule entre le cylindre de freinage principal (3) et le premier dispositif de soupapes (25), dispositif grâce auquel la canalisation de freinage (6) est susceptible d'être fermée dans le cas de réglage du patinage de l'entraînement,
- pour chaque circuit de freinage (I), une pompe auto-aspirante (36), dont le côté entrée (38) est relié aussi bien avec le troisième raccordement (27.3) du premier dispositif de soupapes (25) qu'également, au moins indirectement, avec la canalisation de freinage (7) de la roue non entraînée du véhicule, et dont le côté sortie (41) est relié avec la canalisation de freinage (6) de la roue entraînée du véhicule, entre le premier et le second dispositifs de soupapes (25, 33),
système caractérisé en ce que :
- le côté entrée (38) de la pompe (36) est en liaison avec la canalisation de freinage (7) de la roue non entraînée du véhicule entre le premier dispositif de soupapes (28) de cette roue, qui est commuté dans la position de maintien de la pression en cas de réglage du patinage de l'entraînement, et le cylindre de freinage principal (3), cette liaison s'effectuant au moins indirectement par l'intermédiaire d'une canalisation d'aspiration (45) sur laquelle est placé un troisième dispositif de soupapes (46) ouvrant la canalisation (45) en cas de réglage du patinage de l'entraînement,
- de la canalisation d'aspiration (45) part, entre le troisième dispositif de soupapes (46) et la pompe (36), une canalisation de freinage auxiliaire (53), qui est raccordée à la canalisation de freinage (7) du frein de roue (11) de la roue non entraînée du véhicule, entre ce frein de roue (11) et le second raccordement (29.2) côté frein de roue du premier dispositif de soupapes (28), et cette canalisation de freinage auxiliaire (53) comprend un quatrième dispositif de soupapes (54) susceptible d'être commandé par pression permettant le passage entre le cylindre de freinage principal (3) et le frein de roue (11).

2. Système de freinage hydraulique à plusieurs circuits selon la revendication 1, caractérisé en ce que la canalisation de freinage (6) de la roue entraînée du véhicule est en liaison avec la canalisation d'aspiration (45) de la même façon que dans le cas de la roue non entraînée du véhicule, par l'intermédiaire d'une canalisation de freinage auxiliaire (55) avec un quatrième dispositif de soupapes (56) susceptible d'être commandé par pression.

3. Système de freinage hydraulique à plusieurs circuits selon la revendication 1 ou la revendication 2, caractérisé en ce que le quatrième dispositif de soupapes (54) est réalisé sous la forme d'une soupape de retenue.

4. Système de freinage hydraulique à plusieurs circuits selon la revendication 1, caractérisé en ce que le troisième dispositif de soupapes (46) est un distributeur à 2/2 voies susceptible de commuter électromagnétiquement à partir d'une position de fermeture (46a), prise sous l'action d'un ressort, dans sa position de passage (46b).
